(19) Europäisches Patentamt / European Patent Office / Office européen des brevets

(11) **EP 3 712 210 A1**

(12) **EUROPEAN PATENT APPLICATION**
published in accordance with Art. 153(4) EPC

(43) Date of publication:
**23.09.2020 Bulletin 2020/39**

(21) Application number: **18878875.6**

(22) Date of filing: **14.11.2018**

(51) Int Cl.:
*C08L 77/00* (2006.01)    *C08K 7/02* (2006.01)
*C08L 1/02* (2006.01)    *F16C 33/20* (2006.01)

(86) International application number:
**PCT/JP2018/042050**

(87) International publication number:
**WO 2019/098210 (23.05.2019 Gazette 2019/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.11.2017  JP 2017221111
02.07.2018  JP 2018126103**

(71) Applicant: **Unitika Ltd.
Amagasaki-shi, Hyogo 660-0824 (JP)**

(72) Inventors:
• **NOGUCHI, Shota**
  **Uji-shi**
  **Kyoto 611-0021 (JP)**
• **NAKAI, Miho**
  **Uji-shi**
  **Kyoto 611-0021 (JP)**
• **KUMAZAWA, Shohei**
  **Uji-shi**
  **Kyoto 611-0021 (JP)**
• **KAMIKAWA, Hiroo**
  **Uji-shi**
  **Kyoto 611-0021 (JP)**

(74) Representative: **Vossius & Partner
Patentanwälte Rechtsanwälte mbB
Siebertstrasse 3
81675 München (DE)**

(54) **SLIDING MEMBER**

(57)    The present invention provides a sliding member which is superior to a conventional polyamide sliding member not only in mechanical properties (especially, flexural property) but also in sliding property. The present invention relates to a sliding member comprising unmodified cellulose fibers or cellulose fibers in which a part of hydroxyl groups from cellulose has been modified with a hydrophilic substituent, which have an average fiber diameter of 10 $\mu$m or less, in an amount of 0.1 to 50 parts by mass with respect to 100 parts by mass of a polyamide resin.

**Description**

TECHNICAL FIELD

The present invention relates to a sliding member using a polyamide resin containing cellulose fibers.

BACKGROUND ART

Conventionally, metal materials have been used for sliding members such as gears, bearings, and bearings of cams, but in recent years, resin materials have been increasingly used from the viewpoint of weight reduction. When a resin material is used as a sliding member, it is common to mix a solid lubricant such as molybdenum disulfide, graphite, and a fluororesin, or a liquid lubricant such as a lubricating oil or silicone oil as a sliding improver. In applications requiring higher mechanical properties (especially, flexural property), a fibrous inorganic reinforcement such as glass fiber or carbon fiber may be used in combination. In this case, however, mechanical properties (especially, flexural property) are improved, but there is a problem that the fibrous inorganic reinforcement that has fallen off a sliding surface acts as an abrasive and rather advances the wear of a counter material.

As a sliding member made of a resin composition containing no fibrous inorganic reinforcement, Patent Literature 1 discloses a sliding resin composition composed of a resin composition in which a hydrophobized cellulose fiber in which hydroxyl groups from cellulose are modified with hydrophobic substituents is blended with a thermoplastic resin.

CITATION LIST

PATENT LITERATURE

Patent Literature 1: JP-A-2017-171698

SUMMARY OF INVENTION

PROBLEMS TO BE SOLVED BY THE INVENTION

However, since the resin composition of Patent Literature 1 is prepared by blending the cellulose fibers with the matrix resin by melt-kneading, the cellulose fibers cannot be fully dispersed and the reinforcing effect produced by the cellulose fibers is not sufficiently exerted. For example, sliding members manufactured from conventional resin compositions are insufficient in mechanical properties (especially, flexural property) and sliding property.

The present invention is intended to solve the above-described problems, and an object thereof is to provide a sliding member superior in sliding property as well as mechanical properties (especially, flexural property) as compared to conventional polyamide-based sliding members.

MEANS FOR SOLVING PROBLEMS

The present inventors conducted intensive studies to solve the above problems, and as a result, found that the above object can be achieved by using a resin composition prepared by incorporating specific cellulose fibers during the polymerization of a polyamide resin, and thus have reached the present invention.

That is, the gist of the present invention is as follows.

(1) A sliding member comprising unmodified cellulose fibers or cellulose fibers in which a part of hydroxyl groups from cellulose has been modified with a hydrophilic substituent, which have an average fiber diameter of 10 $\mu$m or less, in an amount of 0.1 to 50 parts by mass with respect to 100 parts by mass of a polyamide resin.

(2) The sliding member of (1), further comprising a strength improver other than the cellulose fibers in an amount of 0.1 to 50 parts by mass with respect to 100 parts by mass of the polyamide resin.

(3) The sliding member of (2), wherein the strength improver is one or more kinds of reinforcements selected from the group consisting of a fibrous reinforcement and a particulate reinforcement.

(4) The sliding member of any one of (1) to (3), further comprising a sliding improver other than the cellulose fiber in an amount of 0.1 to 50 parts by mass with respect to 100 parts by mass of the polyamide resin.

(5) The sliding member of (4), wherein the sliding improver is one or more kinds of materials selected from the group consisting of a fluororesin, a silicone oil, a phosphate, a mineral oil, a montanate, and molybdenum disulfide.

(6) The sliding member of any one of (1) to (5), further comprising an impact resistance improver in an amount of 0.1 to 50 parts by mass with respect to 100 parts by mass of the polyamide resin.

(7) The sliding member of (6), wherein the impact resistance improver is one or more kinds of materials selected from the group consisting of a polyolefin-based polymer, an elastomer, a synthetic rubber, and a natural rubber.

(8) The sliding member of any one of (1) to (7), wherein the polyamide resin is two or more kinds of polyamide resins.

(9) The sliding member of any one of (1) to (8), wherein a specific wear amount of the sliding member is 90% or less as compared with a specific wear amount of a sliding member having the same composition except for not comprising the cellulose fiber.

(10) The sliding member of any one of (1) to (9), wherein a content of the cellulose fiber is 4 to 30 parts by mass, an average fiber diameter of the cellulose fiber is 20 to 100 nm, and the polyamide resin includes polyamide 6.

(11) A method for manufacturing a sliding member, wherein cellulose fibers are added during polymerization of a polyamide resin.

(12) The method for manufacturing a sliding member of (11), wherein the sliding member is the sliding member of any one of (1) to (10).

EFFECTS OF THE INVENTION

According to this invention, it is possible to produce a sliding member superior in sliding property as well as mechanical properties (especially, flexural property) as compared to conventional polyamide-based sliding members

MODES FOR CARRYING OUT THE INVENTION

The sliding member of the present invention contains cellulose fibers having an average fiber diameter of 10 μm or less in a polyamide resin.

The polyamide resin to be used in the present invention is a polymer having amide linkages formed from an amino acid, a lactam or a diamine and a dicarboxylic acid.

Examples of the amino acid include 6-aminocaproic acid, 11 -aminoundecanoic acid, 12-aminododecanoic acid, and paraaminomethylbenzoic acid.

Examples of the lactam include ε-caprolactam and ω-laurolactam.

Examples of the diamine include tetramethylenediamine, hexamethylenediamine, nonamethylenediamine, decamethylenediamine, undecamethylenediamine, dodecamethylenediamine, 2,2,4-/2,4,4-trimethylhexamethylenediamine, 5-methylnonamethylenediamine, 2,4-dimethyloctamethylenediamine, metaxylylenediamine, paraxylylenediamine, 1,3-bis(aminomethyl)cyclohexane, 1-amino-3-aminomethyl-3,5,5-trimethylcyclohexane, 3,8-bis(aminomethyl)tricyclodecane, bis(4-aminocyclohexyl)methane, bis(3-methyl-4-aminocyclohexyl)methane, 2,2-bis(4-aminocyclohexyl)propane, and bis(aminopropyl)piperazine.

Examples of the dicarboxylic acid include adipic acid, suberic acid, azelaic acid, sebacic acid, dodecandioic acid, terephthalic acid, isophthalic acid, naphthalenedicarboxylic acid, 2-chloroterephthalic acid, 2-methylterephthalic acid, 5-methylisophthalic acid, 5-sodium sulfoisophthalic acid, hexahydroterephthalic acid, hexahydroisophthalic acid, and diglycolic acid.

Examples of the polyamide resin to be used in the present invention include polycaproamide (polyamide 6), polytetramethylene adipamide (polyamide 46), polyhexamethylene adipamide (polyamide 66), polyhexamethylene sebacamide (polyamide 610), polyhexamethylene dodecamide (polyamide 612), polyundecamethylene adipamide (polyamide 116), polyundecaneamide (polyamide 11), polydodecanamide (polyamide 12), polytrimethylhexamethylene terephthalamide (polyamide TMHT), polyhexamethylene terephthalamide (polyamide 6T), polyhexamethylene isophthalamide (polyamide 6I), polyhexamethylene terephthal/isophthalamide (polyamide 6T/6I), polybis(4-aminocyclohexyl)methane dodecamide (polyamide PACM12), polybis(3-methyl-4-aminocyclohexyl)methanedodecamide (polyamide dimethyl PACM12), polymethaxylylene adipamide (polyamide MXD6), polynonamethylene terephthalamide (polyamide 9T), polydecamethylene terephthalamide (polyamide 10T), polyundecamethylene terephthalamide (polyamide 11T), and polyundecamethylene hexahydroterephthalamide (polyamide 11T(H)), and also include copolymers or mixtures thereof. Among these, polyamide 6, polyamide 66, polyamide 11, polyamide 12, and their copolymers and mixtures are preferable from the viewpoint of further improving the flexural property and the sliding property. From the same point of view, the polyamide resin more preferably contains polyamide 6, that is, the polyamide resin is more preferably polyamide 6 or a mixture containing polyamide 6. From the viewpoint of further improving the sliding property, the polyamide resin is more preferably polyamide 66 or a mixture containing polyamide 66.

In the present description, the flexural property refers to a property in which the flexural strength and the flexural modulus are sufficiently high.

The sliding property is a property of a member of being hard to be worn even if the member is moved in contact with another member (especially, while being slid on another member), and is a property also called abrasion resistance.

The polyamide resin is produced by a polymerization method described below, or further by using a solid phase polymerization method in combination. The molecular weight of the polyamide resin is not particularly limited, and for example, it may be a molecular weight with which the resin composition has a specific relative viscosity as described below.

Examples of the cellulose fibers to be used for the present invention include cellulose fibers derived from plant such as wood, rice straw, cotton, flax, and kenaf, and additionally, biological cellulose such as bacterial cellulose, valonia cellulose, and sea squirt cellulose. In addition, regenerated cellulose and cellulose derivatives are included. Examples of a commercially available product of plant-derived cellulose fiber include "CELISH" made by Daicel FineChem Ltd.

In the present invention, the cellulose fibers work not only as a reinforcement but also as a sliding improver. In order to provide a sliding member being superior not only in mechanical properties (especially, flexural property) but also in sliding property, it is preferable to disperse cellulose fibers uniformly in a sliding member without allowing them to aggregate. For that purpose, the cellulose fibers and the monomer to constitute the polyamide resin must be uniformly mixed at the time of polymerization of the polyamide resin. Therefore, the cellulose fibers to be used must be unmodified cellulose fibers having a high affinity with the monomers to constitute the polyamide resin, or cellulose fibers in which a part of the hydroxyl groups from cellulose have been modified with hydrophilic substituents. Examples of the hydrophilic substituent include a carboxyl group, a carboxymethyl group, and a phosphate group. From the viewpoint of further improving the mechanical properties (especially, flexural property) and the sliding property, unmodified cellulose fibers are preferred. When the cellulose fibers to be used are cellulose fibers in which the hydroxyl groups from cellulose have been modified with hydrophobic substituents, which are poor in affinity with the monomers to constitute the polyamide resin, this situation is not preferable because the wear amount of a resulting sliding member is greater than 90% of the wear amount of a sliding member having the same composition except not containing cellulose fibers and the resulting sliding member is not improved in sliding property as compared with conventional products.

Furthermore, in the present invention, it is desirable that the average fiber diameter of the cellulose fibers be as small as possible. As the average fiber diameter of the cellulose fibers is smaller, the cellulose fibers form a stronger network structure in the matrix resin and the mechanical properties (especially, flexural property) are improved. In addition, when used as a sliding member, the cellulose fibers are exposed in a sliding interface and the net contact area with the counter material is reduced with the advance of the wear of the matrix resin, the sliding property is improved with reduction in average fiber diameter of the cellulose fibers.

The cellulose fibers contained in the sliding member are required to have an average fiber diameter of 10 $\mu$m or less, and from the viewpoint of further improving the mechanical properties (especially, flexural property) and the sliding property, the average fiber diameter is preferably 500 nm or less, more preferably 300 nm or less, even more preferably 150 nm or less, and particularly preferably 100 nm or less. In the case of cellulose fibers having an average fiber diameter greater than 10 $\mu$m, the mechanical properties (especially, flexural property) and the sliding property of the sliding member are significantly impaired for the reasons described above. The lower limit of the average fiber diameter is not particularly limited, but it is preferably set to 3 nm or more (especially, 20 nm or more) in consideration of the productivity of the cellulose fibers.

In order to adjust the average fiber diameter of the cellulose fibers in the sliding member to 10 $\mu$m or less, it is preferable to use cellulose fibers having an average fiber diameter of 10 $\mu$m or less as the cellulose fibers to be mixed with the polyamide resin. As such cellulose fibers having an average fiber diameter of 10 $\mu$m or less, those prepared by microfibrillating cellulose fibers by tearing them are preferred. As a means for the microfibrillation, various pulverizers such as a ball mill, a stone mill, a high-pressure homogenizer, a high-pressure pulverizer, and a mixer can be used. As the cellulose fibers, for example, "CELISH" made by Daicel FineChem Ltd., which is commercially available, can be used.

As the cellulose fibers having an average fiber diameter of 10 $\mu$m or less, aggregates of cellulose fibers yielded as scrap yarns during a step of manufacturing a fiber product using cellulose fibers can be used. Examples of the step of manufacturing a fiber product include the time of spinning yarns, the time of weaving fabric, the time of producing non-woven fabric, and the time of processing a fiber product. Since the aggregates of cellulose fibers are cellulose fibers turned into scrap yarns through those steps, they are refined cellulose fibers.

Bacterial cellulose fibers produced by bacteria can also be used as the cellulose fibers having an average fiber diameter of 10 $\mu$m or less. For example, those produced using acetic acid bacteria of the Acetobacter family as producing bacteria can be used. Cellulose fibers of plants are those in which molecular chains of cellulose are bundled and are formed by bundling very fine microfibrils, whereas cellulose fibers produced by acetic acid bacteria are originally in a ribbon shape 20 to 50 nm wide, and form an extremely fine mesh as compared with the cellulose fibers of plants.

Further, as the cellulose fibers having an average fiber diameter of 10 $\mu$m or less, for example, refined cellulose fibers obtained by oxidizing cellulose fibers in the presence of an N-oxyl compound, followed by washing with water and a physical fibrillation step may be used. Although there are various N-oxyl compounds, for example, 2,2,6,6-tetramethylpiperidine-1-oxyl radical (hereinafter abbreviated to "TEMPO") as described in Cellulose (1998) 5, 153-164, and the like are preferred. Such a compound is added in a catalytic amount range to the aqueous reaction solution. Sodium hypochlorite or sodium chlorite is added to this aqueous solution as a co-oxidizing agent, and a reaction is made to proceed by adding an alkali metal bromide. The pH is maintained at around 10 by adding an alkaline compound such as an aqueous sodium hydroxide solution, and the reaction is continued until no change in pH is observed. The reaction temperature may be room temperature. After the reaction, it is preferable to remove the N-oxyl compound remaining in the system. Various methods such as filtration and centrifugation can be used for the washing. Thereafter, using a pulverizer such as those described above, cellulose fibers refined through a physical fibrillation step can be obtained. The cellulose fiber obtained by the above method is a cellulose fiber in which a part of the hydroxyl groups from cellulose are modified with carboxyl groups. Herein, "modification" includes "substitution".

The cellulose fibers in the sliding member preferably has an aspect ratio ((average fiber length)/(average fiber diameter)), which is the ratio of the average fiber length to the average fiber diameter, of 10 or more, more preferably 50 or more, and still more preferably 100 or more. When the aspect ratio is 10 or more, the mechanical properties (especially, flexural property) and the sliding property of a resulting resin composition are easily improved.

The content of the cellulose fibers constituting the sliding member needs to be 0.1 to 50 parts by mass with respect to 100 parts by mass of the polyamide resin, and from the viewpoint of further improving the mechanical properties (especially, flexural property) and the sliding property, it is preferably 0.1 to 30 parts by mass, more preferably 4 to 30 parts by mass, even more preferably 8 to 25 parts by mass, and most preferably 10 to 20 parts by mass. When the content of the cellulose fibers is less than 0.1 parts by mass with respect to 100 parts by mass of the polyamide resin, neither sufficient mechanical properties (especially, flexural property) nor sufficient sliding property can be obtained. On the other hand, when the content of the cellulose fibers is more than 50 parts by mass with respect to 100 parts by mass of the polyamide resin, it becomes difficult to include the cellulose fibers in the resin composition, and the fluidity of a molten resin is deteriorated, so that the moldability of the resin composition may deteriorate. The expression "100 parts by mass of a polyamide resin" refers to "100 parts by mass of the total amount of two or more kinds of polyamide resins" when two or more kinds of polyamide resins are contained as described below.

In the present invention, the sliding member and the resin composition to be used for producing the sliding member may further contain a strength improver other than cellulose fibers (hereinafter, sometimes simply referred to as "other strength improver"). Examples of the strength improver include fibrous reinforcements and particulate reinforcements.

Examples of the fibrous reinforcements include glass fiber, carbon fiber, boron fiber, asbestos fiber, polyvinyl alcohol fiber, polyester fiber, acrylic fiber, wholly aromatic polyamide fiber, polybenzoxazole fiber, kenaf fiber, bamboo fiber, flax fiber, Bagasse fiber, high-strength polyethylene fiber, alumina fiber, silicon carbide fiber, potassium titanate fiber, brass fiber, stainless steel fiber, steel fiber, ceramic fiber, and basalt fiber. Above all, glass fiber, carbon fiber, metal fiber are preferable, since the effect of improving mechanical properties (especially, flexural property) is higher, they have heat resistance that can withstand the heating temperature at the time of melt-kneading with polyamide resin, and they are easily available. Examples of the metal fiber include potassium titanate fiber, brass fiber, stainless steel fiber, and steel fiber.

When a glass fiber or a carbon fiber is used, it is preferable that the surface thereof be treated with a silane coupling agent. Examples of the silane coupling agent include vinylsilane-based, acrylsilane-based, epoxysilane-based, and aminosilane-based coupling agents. Among them, aminosilane-based coupling agents are preferred because of their high adhesion effect to polyamide resins.

The fiber length of the strength improver other than cellulose fibers (especially, fibrous reinforcement) is preferably 0.1 to 7 mm, and more preferably 0.5 to 6 mm, from the viewpoint of further improving mechanical properties (especially, flexural property) and sliding property, and improving moldability. The fiber diameter of the strength improver is preferably 3 to 20 μm, and more preferably 5 to 13 μm, from the viewpoint of further improving mechanical properties (especially, flexural property) and sliding property, and preventing breakage during melt-kneading. The cross-sectional shape of the strength improver may be any of a circular cross-section, a rectangle, an ellipse, and any other irregular cross-sections, and especially, a circular cross-section is preferred.

The average fiber length measured by the following method is used for the fiber length of the fibrous reinforcement. The length of a fiber is observed with an optical microscope, and the length of the fiber is measured. This measurement is performed for 100 fibers, and their average value is defined as the average fiber length of the fiber reinforcement.

The fiber diameter of the fibrous reinforcement is the average value of the maximum length in a cross-sectional shape, and the average fiber diameter measured by the following method is used. A cross section orthogonal to the length direction of the fiber is observed with an optical microscope, and the diameter of the fiber is measured. This measurement is performed for 100 fibers, and the average value is defined as the average fiber diameter of the fiber reinforcement.

Examples of the particulate reinforcements include talc, mica, layered silicate, calcium carbonate, zinc carbonate, wollastonite, silica, calcium silicate, graphite, sodium aluminate, calcium aluminate, sodium aluminosilicate, magnesium silicate, glass balloon, antimony trioxide, zeolite, and hydrotalcite. Among them, talc, mica, and layered silicate are preferred from the viewpoints of further improving mechanical properties (especially, flexural property) and sliding property, and improving heat resistance.

The particle diameter of the particulate reinforcement is preferably 0.1 to 100 μm, and more preferably 0.5 to 80 μm from the viewpoint of further improving mechanical properties (especially, flexural property) and sliding property.

As the particle diameter of the particulate reinforcement, an average particle diameter measured by the following method is used. A specific surface area per gram of particles is determined using a powder specific surface area analyzer SS-100 (constant pressure air permeation method) made by Shimadzu Corporation, and from the results of the specific surface area measured by the air permeation method according to JIS M-8511, the average particle diameter of the particulate reinforcement is calculated using the following equation.

$$\text{Average particle diameter} = 6 \times 10{,}000/(\text{specific gravity x specific surface area})$$

The sliding member of the present invention has an effect of improving impact resistance when the sliding member contains the above-described other strength improver.

In the present description, impact resistance is a property evaluated by a Charpy impact value, and is a property relating to the toughness of a sliding member. The impact resistance is not necessarily a property which the sliding member of the present invention must have, and is a property which the sliding member preferably has.

From the viewpoint of further improving mechanical properties (especially, flexural property), sliding property and impact resistance, the other strength improvers preferably include one or more kinds of strength improvers selected from the group consisting of glass fiber, carbon fiber, talc, and mica.

In the sliding member and the resin composition to be used for producing the same, when further using a strength improver other than the cellulose fibers, it is preferable from the viewpoint of further improving mechanical properties (especially, flexural property), sliding property, and impact resistance that the content thereof be adjusted to 0.1 to 50 parts by mass, more preferably 5 to 30 parts by mass with respect to 100 parts by mass of the polyamide resin. Two or more kinds of strength improvers other than the cellulose fibers may be contained, and in that case, the total amount thereof is just required to be within the above range.

In the present invention, the sliding member and the resin composition to be used for producing the same may further contain a sliding improver other than the cellulose fibers (hereinafter, sometimes simply referred to as "other sliding improvers"). Examples of such other sliding improvers other than cellulose fibers include fluororesins, silicone oils, phosphates, mineral oils, montanates, and molybdenum disulfide.

Examples of the fluororesins include polytetrafluoroethylene, polytetrafluoroethylene/perfluoroalkoxyethylene copolymer, and polytetrafluoroethylene/polyhexafluoropropylene copolymer. The molecular weight of the fluororesin is not particularly limited, and for example, the MFR (at 372°C, under a load of 5.0 kg) of the fluororesin measured according to ASTM D3307-01 is preferably 0.1 to 100 g/10 minutes, more preferably 5 to 50 g/10 minutes, and even more preferably 10 to 50 g/10 minutes.

Examples of the silicone oils include polydimethylsiloxane, polymethylphenylsiloxane, amino-modified polydimethylsiloxane, epoxy-modified polydimethylsiloxane, alcohol-modified polydimethylsiloxane, carboxy-modified polydimethylsiloxane, and fluorine-modified polydimethylsiloxane. The molecular weight of the silicone oil is not particularly limited. For example, the kinematic viscosity (25°C) of the silicone oil measured with an Ubbelohde viscometer according to ASTM D445-46T is preferably 0.1 to 1,000,000 mm$^2$/s, and more preferably 0.5 to 100,000 mm$^2$/s.

Examples of the phosphates include metaphosphates, pyrophosphates, calcium phosphate, calcium hydrogenphosphate, barium phosphate, lithium phosphate, calcium metaphosphate, and zinc pyrophosphate.

Examples of the mineral oils include spindle oil, turbine oil, machine oil, and dynamo oil.

Examples of the montanates include calcium montanate.

The sliding member of the present invention also has the effect that impact resistance is improved when the sliding member contains the above-described other sliding improvers.

From the viewpoint of further improving mechanical properties (especially, flexural property), sliding property, and impact resistance, the other sliding improvers preferably include a fluororesin (especially, polytetrafluoroethylene).

In the sliding member and the resin composition to be used for producing the same, when further using a sliding improver other than the cellulose fibers, it is preferable from the viewpoint of further improving mechanical properties (especially, flexural property), sliding property, and impact resistance that the content thereof be adjusted to 0.1 to 50 parts by mass, more preferably 5 to 30 parts by mass with respect to 100 parts by mass of the polyamide resin. Two or more kinds of sliding improvers other than the cellulose fibers may be contained, and in that case, the total amount thereof is just required to be within the above range.

A sliding member may be required to have impact resistance in addition to mechanical properties (especially, flexural property) and sliding property. However, when a resin composition in which cellulose fibers are mixed with a polyamide resin is used, impact resistance may lower. The sliding member and the resin composition to be used for producing the same may further contain an impact resistance improver. Examples of the impact resistance improver include polyolefin-based polymers, elastomers, synthetic rubbers, and natural rubbers.

The polyolefin-based polymer is a polymer containing at least an olefin as a monomer component. The polyolefin-based polymer may have been acid-modified. The polyolefin-based polymer may contain other monomers such as (meth)acrylic acid, alkyl (meth)acrylates, and dienes as monomer components. Olefins are unsaturated hydrocarbons having one double bond in one molecule, and examples thereof include ethylene, propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, and combinations thereof. Examples of the alkyl (meth)acrylates include methyl (meth)acrylate, ethyl (meth)acrylate, n-propyl (meth)acrylate, n-butyl (meth)acrylate, t-butyl (meth)acrylate, n-hexyl (meth)acrylate, 2-ethylhexyl (meth)acrylate, cyclohexyl (meth)acrylate, stearyl (meth)acrylate, octadecyl (meth)acrylate, phenyl (meth)acrylate, benzyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate, 2,3,4,5-tetrahydroxypentyl (meth)acrylate, aminoethyl acrylate, propylaminoethyl acrylate, dimethylaminoethyl methacrylate, ethylaminopropyl methacrylate, phenylaminoethyl methacrylate, and cyclohexylaminoethyl methacrylate. Examples of the dienes include 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, dicyclooctadiene, methylenenorbornene, 5-vinylnorbomene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, and 2-propenyl-2,2-norbornadiene. Examples of the functional group to acid-modify include carboxylic acid groups, carboxylic anhydride groups, carboxylic ester groups, metal carboxylate groups, carboxylic imide groups, carboxylic amide groups, and an epoxy group; among these, carboxylic anhydride groups are preferable, and a maleic anhydride group is more preferable.

Specific examples of the polyolefin-based polymer include ethylene-propylene copolymers, ethylene-propylene-diene copolymers, ethylene-butene copolymers, ethylene-octene copolymers, ethylene-ethyl acrylate copolymers, ethylene-methyl acrylate copolymers, ethylene-acrylic acid copolymers, ethylene-methyl methacrylate copolymers, ionomer polymers, acid-modified ethylene-propylene copolymers, acid-modified ethylene-propylene-diene copolymers, acid-modified ethylene-butene copolymers, acid-modified ethylene-octene copolymers, acid-modified ethylene-ethyl acrylate copolymers, acid-modified ethylene-methyl acrylate copolymers, and acid-modified ethylene-methyl methacrylate copolymers.

The ionomer polymer is a copolymer of an olefin and an $\alpha,\beta$-unsaturated carboxylic acid in which at least a part of the carboxyl groups of the copolymer have been ionized through the neutralization of metal ions. Examples of the olefin to constitute the ionomer polymer include the same compounds as the olefins capable of constituting the above-mentioned polyolefin-based polymer. The $\alpha,\beta$-unsaturated carboxylic acid to constitute the ionomer polymer is not particularly limited, and examples thereof include acrylic acid, methacrylic acid, maleic acid, maleic anhydride, phthalic acid, and itaconic acid. Examples of the metal ion to constitute the ionomer polymer include alkali metal ions (e.g., $Li^+$, $Na^+$, and $K^+$), alkaline earth metal ions (e.g., $Mg^{2+}$ and $Ca^{2+}$), and $Zn^{2+}$.

When the polyolefin-based polymer has been acid-modified, examples of the functional group to acid-modify include carboxylic acid groups, carboxylic anhydride groups, carboxylic ester groups, metal carboxylate groups, carboxylic imide groups, carboxylic amide groups, and an epoxy group; among these, carboxylic anhydride groups are preferable, and a maleic anhydride group is more preferable. The acid-modification can be achieved by copolymerizing an acid-modifying monomer component having a functional group to acid-modify as described above. The content of the acid-modifying monomer component constituting the acid-modified polyolefin-based polymer is not particularly limited, and for example, the acid value of the acid-modified polyolefin-based polymer measured according to JIS K0070 is preferably 0.1 to 200 mgKOH/g, and more preferably 1 to 100 mgKOH/g. The acid value is defined as the number of mg of KOH required to neutralize 1 g of the acid-modified polyolefin-based polymer.

The molecular weight of the polyolefin-based polymer is not particularly limited, and for example, the MFR (at 190°C and a load of 2.16 kg) of the polyolefin-based polymer, measured according to ASTM D3307-01 is preferably 0.01 to 30 g/10 minutes, and more preferably 0.1 to 10 g/10 minutes. Polyolefin-based polymers do not contain fluorine atoms.

Examples of the elastomer include styrene-based elastomers, urethane-based elastomers, vinyl chloride-based elastomers, polyester-based elastomers, and polyamide-based elastomers. The molecular weight of the elastomer is not particularly limited, and for example, the weight-average molecular weight thereof is preferably 10,000 to 500,000, more preferably 35,000 to 500,000, and particularly preferably 35,000 to 300,000. The weight-average molecular weight is measured by GPC (standard polystyrene conversion).

Examples of the synthetic rubber include thiochol rubber, polysulfide rubber, acrylic rubber, silicone rubber, polyether rubber, and epichlorohydrin rubber. The molecular weight of the synthetic rubber is not particularly limited, and for example, the weight-average molecular weight thereof is preferably 10,000 to 900,000, more preferably 20,000 to 500,000, and even more preferably 50,000 to 200,000. The weight-average molecular weight is measured by GPC (standard polystyrene conversion).

Examples of the natural rubber include natural rubber latex, technically specified rubber (TSR), ribbed smoked sheet (RSS), gutta-percha, Eucommia ulmoides-derived natural rubber, guayule-derived natural rubber, and Russian dandelion-derived natural rubber, and the natural rubber of the present invention further include modified natural rubbers obtained by modifying these rubbers, such as epoxidized natural rubber, methacrylic acid-modified natural rubber, and styrene-modified natural rubber. The molecular weight of the natural rubber is not particularly limited, and for example, the weight-average molecular weight thereof is preferably 10,000 to 700,000, and more preferably 50,000 to 500,000. The weight-average molecular weight is measured by GPC (standard polystyrene conversion).

From the viewpoint of further improving the mechanical properties (especially, flexural property), the sliding property, and the impact resistance, the impact resistance improver preferably contains a polyolefin-based polymer (especially, an acid-modified polyolefin-based polymer and/or an ionomer).

In the sliding member and the resin composition to be used for the production thereof, in the case where an impact resistance improver is further used, the content thereof is preferably adjusted to 0.1 to 50 parts by mass, and more preferably 5 to 20 parts by mass with respect to 100 parts by mass of the polyamide resin from the viewpoint of further improving the mechanical properties (especially, flexural property), the sliding property and the impact resistance. Two or more kinds of impact resistance improvers may be contained, and in this case, it is just required that the total amount thereof be within the above range.

From the viewpoint of further improving mechanical properties (especially, flexural property), sliding property and impact resistance, it is preferable that the sliding member of the present invention contain at least an impact resistance improver among the above-described additives (i.e., other strength improvers, other sliding improvers and impact resistance improvers), or contain other strength improvers and other sliding improvers in combination. The embodiment of containing at least an impact resistance improver include the embodiment of containing an impact resistance improver alone among the above-mentioned additives, and the embodiment of containing an impact resistance improver and other strength improvers and/or other sliding improvers in combination.

The sliding member may be required to have low water absorption property (for example, resistance to water absorption). However, when a resin composition in which the matrix resin is a polyamide 6 resin is used, there is a problem that the water absorption rate is high. When the sliding member of the present invention is required to have low water absorption property, the sliding member and the resin composition to be used for producing the sliding member may further contain a polyamide resin lower in water absorption property than the polyamide 6 resin. Examples of the polyamide resin lower in water absorption property than the polyamide 6 resin include polyamide 66, polyamide 11, polyamide 12, polyamide 6T, polyamide 10T, and copolymers and mixtures thereof.

The sliding member of the present invention has an effect of improving impact resistance when the sliding member contains two or more kinds of polyamide resins. The term "two or more kinds of polyamide resins" mean two or more kinds of polyamide resins differing in monomer composition. From the viewpoint of further improving the mechanical properties (especially, flexural property), the sliding property, and the impact resistance, the sliding member of the present invention preferably contains two or more kinds of polyamide resins including polyamide 6 and one or more kinds of polyamides selected from the group consisting of polyamide 66, polyamide 12, polyamide 6/66 copolymer, polyamide 6/12 copolymer and polyamide 6/66/12 copolymer. For example, the term "polyamide 6/66 copolymer" means a copolymer of the constituent monomer of polyamide 6 and the constituent monomer of polyamide 66.

In the case of further using a polyamide resin in the sliding member and the resin composition to be used for the production thereof, the content thereof is preferably adjusted to 0.1 to 50 parts by mass, and more preferably 5 to 20 parts by mass with respect to 100 parts by mass of the polyamide resin to be used during polymerization. When the sliding member contains, especially, polyamide 6 in combination with one or more kinds of other polyamides selected from the group consisting of polyamide 66, polyamide 12, polyamide 6/66 copolymer, polyamide 6/12 copolymer, and polyamide 6/66/12 copolymer, the ratio of the polyamide 6/the other polyamides, in mass ratio, is preferably from 95/5 to 60/40, and especially from 90/10 to 80/20 from the viewpoint of further improving the mechanical properties (especially, flexural property), the sliding property, and the impact resistance.

[Method for manufacturing sliding member]

The sliding member of the present invention can be manufactured by adding cellulose fibers at the time of polymerization of a polyamide resin to obtain a resin composition, and then performing molding by using the obtained resin composition. Specifically, first, a resin composition containing cellulose fibers is produced by mixing a monomer to constitute the polyamide resin and an aqueous dispersion of cellulose fibers having an average fiber diameter of 10 $\mu$m or less, and performing a polymerization reaction. The resin composition may have a so-called pellet form. In the case where an additive that can be added to the resin composition described below is added during the polymerization reaction, the resin composition refers to one containing the additive as well. The time of the polymerization of polyamide includes not only the time of polymerization using monomers to constitute a polyamide resin, but also the time of polymerization using a prepolymer capable of forming the polyamide.

In the case where the sliding member of the present invention contains additives such as a strength improver other than cellulose fibers, a sliding improver other than cellulose fibers, and an impact resistance improver, such additives may be blended independently at the time of the polymerization of the polyamide resin, or at the time of melt-kneading with the resin composition after polymerization. From the viewpoint of further improving impact resistance, it is preferable that these additives be blended with the resin composition after polymerization at the time of melt-kneading, or the like. The blending at the time of melt-kneading may be achieved by feeding to a main hopper of an extruder, or may be achieved by feeding to a side feeder of the extruder. From the viewpoint of further improving impact resistance, it is preferable that the strength improver is fed to the side feeder and the sliding improver and the impact resistance improver be fed to the main hopper. When the sliding member of the present invention contains two or more kinds of polyamide resins, it is just required to obtain a resin composition by adding cellulose fibers at the time of the polymerization of one polyamide resin, and the remaining polyamide resin is usually blended with the resin composition at the time of melt-kneading or the like.

Cellulose fibers are very high in affinity with water, and the smaller the average fiber diameter thereof, the better the state of their dispersion in water can be kept. If water is lost, the cellulose fibers are strongly aggregated by hydrogen bonding, and if once aggregated, the cellulose fibers are difficult to take the same dispersion state as before the aggregation. In particular, this tendency becomes remarkable as the average fiber diameter of the cellulose fibers decreases. Therefore, the cellulose fibers are preferably blended with the polyamide resin in a state where the fibers contain water. Therefore, in the present invention, it is preferable to employ a method of obtaining a resin composition containing cellulose fibers by performing a polymerization reaction of monomers to constitute the polyamide resin in the presence of cellulose fibers containing water. Such a production method makes it possible to uniformly disperse the cellulose fibers in the polyamide resin without allowing the fibers to aggregate.

The aqueous dispersion of cellulose fibers is a dispersion in which cellulose fibers having an average fiber diameter of 10 $\mu$m or less are dispersed in water, and the content of the cellulose fibers in the aqueous dispersion is preferably adjusted to 0.01 to 50 parts by mass. The aqueous dispersion of cellulose fibers can be obtained by stirring purified water and cellulose fibers with a mixer or the like. Then, the aqueous dispersion of the cellulose fibers and the monomers to constitute the polyamide resin are mixed and stirred with a mixer or the like to form a uniform dispersion. Thereafter, a polymerization reaction can be carried out by heating the dispersion to elevate the temperature to 150 to 270°C, and stirring it. At this time, the water in the aqueous dispersion of the cellulose fibers can be discharged by gradually discharging water vapor when heating the dispersion. During the polymerization of the polyamide resin, a catalyst such as phosphoric acid or phosphorous acid may be added as necessary. After the completion of the polymerization reaction, it is preferable to discharge the resulting resin composition and then cut it into pellets.

When bacterial cellulose is used as the cellulose fibers, a material prepared by immersing bacterial cellulose in purified water, thereby replacing the solvent may be used as the aqueous dispersion of the cellulose fibers. When using solvent-replaced bacterial cellulose, it is preferable to mix the aqueous dispersion of the cellulose fibers having a prescribed concentration adjusted after the solvent replacement with the monomers to constitute the polyamide resin and then make a polymerization reaction advance in the same manner as described above.

In the above method, since the cellulose fibers having an average fiber diameter of 10 $\mu$m or less are subjected to the polymerization reaction as they are in the aqueous dispersion, the cellulose fibers can be subjected to the polymerization reaction with good dispersibility. Furthermore, the dispersibility of the cellulose fibers subjected to the polymerization reaction is improved by their interaction with the monomers and water during the polymerization reaction and by stirring under the above-mentioned temperature conditions and the fibers are prevented from aggregating together, so that it becomes possible to obtain a resin composition in which cellulose fibers having a small average fiber diameter are dispersed well. According to the above-described method, the cellulose fibers contained in the resin composition after the completion of the polymerization reaction may be smaller in average fiber diameter than the cellulose fibers added before the polymerization reaction.

Furthermore, in the above-described method, a step of drying the cellulose fibers is not required, and the production can be performed without a step in which fine cellulose fibers are scattered. Therefore, a resin composition can be obtained with good operability. In addition, since it is not necessary to replace water with an organic solvent for the purpose of uniformly dispersing the monomers and the cellulose fibers, it is possible to excel in handling and to suppress the emission of chemical substances during the manufacturing process.

The resin composition to be used in the present invention may contain other additives other than the above-described additives as long as the properties of the resin composition are not significantly impaired. Such other additives may be blended at the time of the polymerization of the polyamide resin, or may be blended with the polyamide resin after the polymerization at the time of melt-kneading. Examples of the other additives include polymers different from the polyamide resin, pigments, heat stabilizers, antioxidants, weathering agents, plasticizers, lubricants, release agents, antistatic agents, impact modifiers, flame retardants, compatibilizer, and crystal nucleating agents.

From the viewpoint of further improving the mechanical properties (especially, flexural property) of the sliding member and improving the fluidity and moldability of the resin composition, the relative viscosity of the resin composition to be used for the present invention is preferably 1.5 to 5.0, and more preferably 1.7 to 4.0 when measured at a temperature of 25°C and a concentration of 1 g/100 mL using 96% sulfuric acid as a solvent.

The sliding member of the present invention can be obtained by molding a resin composition by a known molding method. Examples of the known molding method include an injection molding method, an extrusion forming method, and a blow molding method. Among them, the injection molding method can be preferably used. The injection molding machine is not particularly limited, and examples thereof include a screw-in-line type injection molding machine and a plunger type injection molding machine. The resin composition heat-melted in the cylinder of the injection molding machine is metered every shot, injected into a mold in a molten state, cooled and solidified in a prescribed shape, and then taken out as a molded article from the mold. The resin temperature at the time of injection molding is preferably equal to or higher than the melting point of the obtained resin composition, and more preferably is lower than "the melting point + 100°C". At the time of the heat-melting of the resin composition, it is preferable to use a fully dried resin composition. If the water content is large, the resin foams in the cylinder of the injection molding machine, and it may be difficult to obtain an optimal molded article. The water content of the resin composition to be used for injection molding is preferably less than 0.3% by mass, and more preferably less than 0.1% by mass.

The sliding member of the present invention is superior not only in mechanical properties (especially, flexural property) but also in sliding property, so that it can be used for electrical supplies, bearings of office machines and power equipment, various gears, cams, bearings, end surface materials of mechanical seals, valve seats, V rings, rod packings, piston rings, rotary shafts/rotary sleeves of compressors, pistons, impellers, vanes, rotors, etc.

EXAMPLES

Hereinafter, the present invention is described specifically by way of Examples, but the present invention is not limited by these Examples. The evaluation of sliding members was performed by the following methods.

A. Evaluation methods

(1) Average fiber diameter of cellulose fiber in sliding member

By using a freeze ultramicrotome, a 100-nm thick section was sampled from an injection-molded piece and was stained, and then the section was observed with a transmission electron microscope (JEM-1230, made by JEOL Ltd.). From the obtained electron microscopic image, the length of a cellulose fiber (monofilament) in the perpendicular direction with respect to the lengthwise direction of the cellulose fiber was measured. At this time, the maximum length in the perpendicular direction was defined as the fiber diameter. Similarly, the fiber diameters of arbitrary ten cellulose fibers (monofilaments) were measured, and the average value of the ten fibers was calculated to be the average fiber diameter.

For a cellulose fiber having a large fiber diameter, a 10-$\mu$m thick section sampled with a microtome or a sliding member as it was observed using a stereomicroscope (SZ-40, made by Olympus Corp.), and fiber diameters were measured from the obtained image in the same manner as described above, and the average fiber diameter was determined.

(2) Relative viscosity

A resin composition was dissolved in 96% sulfuric acid such that the concentration of a polyamide after the removal of the cellulose was 1 g/dL, and the relative viscosity was measured at 25 °C using an Ubbelohde viscometer.

(3) Flexural property (flexural strength and flexural modulus)

A fully dried resin composition was injection-molded using an injection molding machine (NEX110-12E, made by Nissei Plastic Industrial Co., Ltd.), thereby affording a multipurpose specimen A described in ISO Standard 3167.

The flexural strength and flexural modulus of the obtained multipurpose specimen were measured using a three-point support bending method according to ISO 178 (distance between support points: 64 mm, test speed: 2 mm/min, test atmosphere: 23°C, 50% RH, absolutely dried state).

Practically, for a specimen having the same composition except that it does not contain cellulose fibers, it is necessary that both the flexural strength and the flexural modulus are 110% or more (△), and they are preferably 120% or more (○) and more preferably 150% or more (◎).

(4) Sliding property (specific wear amount)

The fully dried resin composition was injection-molded using an injection molding machine (NEX110-12E made by Nissei Plastic Industrial Co., Ltd.), thereby affording a cylindrical molded piece having an outer diameter of 25.6 mm, an inner diameter of 20 mm, and a thickness of 15 mm.

Using the obtained molded piece, a test was conducted by using a Suzuki's friction and abrasion tester (EFM-III-E type made by Toyo Baldwin Co., Ltd.) in accordance with the JIS K7218A method (counter material: S45C steel, load: 20 N, friction distance: 3 km), and the specific wear amount was determined from the difference in mass between before and after the test.

Practically, for a molded piece having the same composition except that it does not contain cellulose fibers, it is necessary that the specific wear amount is 90% or less (△), and it is preferably 65% or less (○) and more preferably 20% or less (⊙).

(5) Comprehensive evaluation of flexural property and sliding property

All evaluation results of flexural property and sliding property were comprehensively evaluated.
⊙: All evaluation results of flexural property and sliding property were ⊙.
○: The lowest evaluation results among all the evaluation results of flexural property and sliding property were ○.
△: The lowest evaluation results among all the evaluation results of flexural property and sliding property were △.
✕: The lowest evaluation results among all the evaluation results of the flexural property and the sliding property were X.

(6) Charpy impact value (impact resistance)

The multipurpose specimen A prepared in (3) was notched at one site. The impact strength of the notched specimen was measured in accordance with JIS K 7111 - 1.

In the present invention, the impact resistance is not a property which the sliding member of the present invention must have, but is a property which the sliding member preferably has.

For the specimen having the composition of Example 2 (2.3 kJ/m$^2$), the impact strength is preferably 110% or more (○), more preferably 140% or more (⊙), and even more preferably 230% or more (⊙⊙).

B. Raw materials

(1) Polyamide resin monomer component

• ε-Caprolactam: made by Ube Industries, Ltd.

(2) Cellulose fiber

• KY100G: CELISH KY100G made by Daicel FineChem Ltd., containing 10% by mass of unmodified cellulose fibers having an average fiber diameter of 125 nm.
• KY100S: CELISH KY100S made by Daicel FineChem Ltd., containing 25% by mass of unmodified cellulose fibers having an average fiber diameter of 140 nm.

• Bacterial cellulose fiber (unmodified cellulose fiber):

Into a 200-mL volume Erlenmeyer flask, 50 mL of a culture medium having a composition including 0.5% by mass of glucose, 0.5% by mass of polypeptone, 0.5% by mass of yeast extract and 0.1% by mass of magnesium sulfate heptahydrate was dispensed, and was sterilized by steam at 120°C for 20 minutes in an autoclave. To this culture medium, a platinum loop of Gluconacetobacter xylinus (NBRC 16670) grown in a test tube slant agar medium was inoculated, and the resulting culture was subjected to a static incubation at 30°C for 7 days. After 7 days, a white gel film-like bacterial cellulose fiber was produced in the upper layer of the culture.

The obtained bacterial cellulose fiber was crushed with a mixer, then repeatedly immersed in water and washed with water, thus substitution with water was performed, and consequently an aqueous dispersion containing 4.1 % by mass of bacterial cellulose fibers having an average fiber diameter of 60 nm was prepared.

• Scrap yarn (unmodified cellulose fiber):

Purified water was added to the aggregates of cellulose fibers that had been yielded as scrap yarns during the process of manufacturing a non-woven fabric, and the mixture was stirred with a mixer, and thus an aqueous dispersion containing 6% by mass of unmodified cellulose fibers having an average fiber diameter of 3240 nm was prepared.

• TEMPO-catalytically oxidized cellulose fibers (cellulose fibers in which a part of hydroxyl groups from cellulose has been modified with a hydrophilic substituent):

Unbeaten kraft pulp derived from softwood after bleaching (whiteness degree: 85%) (500 g; absolutely dried) was added to 500 mL of an aqueous solution containing 780 mg of TEMPO (2,2,6,6-tetramethylpiperidine-1-oxyl radical) and 75.5 g of sodium bromide dissolved therein, and the mixture was stirred until the pulp was uniformly dispersed. An aqueous solution of sodium hypochlorite was added thereto such that a concentration of 6.0 mmol/g was achieved, and an oxidation reaction was thereby started. Because the pH in the system lowers during the reaction, the pH was adjusted to 10 by sequentially adding a 3M aqueous solution of sodium hydroxide. The reaction was terminated when sodium hypochlorite was consumed and the system came to exhibit no change in pH. The mixture after the reaction was filtered through a glass filter to separate the pulp, which was fully washed with water, thereby affording an oxidized pulp. The oxidized pulp obtained in the above-described step was adjusted to 1.0% (w/v) with water and then treated three times with an ultra-high pressure homogenizer (20°C, 150 MPa), and thus an aqueous dispersion containing 1.0% by mass of TEMPO-catalytically oxidized cellulose fibers having an average fiber diameter of 10 nm was prepared.
By analyzing the TEMPO-catalytically oxidized cellulose fiber by $^1$H-NMR, $^{13}$C-NMR, FT-IR, and neutralization titration, it was confirmed that a part of hydroxyl groups from cellulose had been substituted with carboxyl groups.

• Ether-modified cellulose fiber (cellulose fiber in which a part of hydroxyl groups from cellulose has been modified with a hydrophobic substituent):

Water (19.94 kg) was added to 600 g of bleached softwood kraft pulp (made by Oji Paper Co., Ltd., solid content: 25%), and thus an aqueous suspension having a solid concentration of 0.75% by mass was prepared. The obtained slurry was mechanically defibrated by using a bead mill (NVM-2 made by AIMEX Co., Ltd.) (zirconia bead diameter: 1 mm, amount of filled beads: 70%, rotation speed: 2000 rpm, number of treatments: 2), thereby yielding cellulose fibers. The resulting aqueous dispersion of cellulose fibers (100 g) was put into every centrifuge tube, and then centrifuged (7000 rpm, 20 minutes). The supernatant was removed, and the precipitate was taken out. Acetone (100 g) was added to every centrifuge tube, stirred well to disperse the contents in acetone, and then centrifuged. The supernatant was removed, and the precipitate was taken out. The above operation was further repeated twice, affording a cellulose fiber slurry in acetone having a solid content of 5% by mass.
The resulting cellulose fiber slurry in acetone was charged into a 1-L four-necked flask equipped with stirring blades such that the solid content of the cellulose fibers became 5 g. N-methyl-2-pyrrolidone (NMP) (500 mL) and toluene (250 mL) were added, and the cellulose fibers were dispersed in NMP/toluene with stirring. A condenser was attached, and the dispersion was heated to 150°C under a nitrogen atmosphere, so that the acetone and the water contained in the dispersion were distilled off together with toluene. Thereafter, the dispersion was cooled to 40°C, 15 mL of pyridine and 25 g of hexamethyldisilazane (silyl etherifying agent) were added, and the mixture was reacted under a nitrogen atmosphere for 90 minutes, thereby preparing an NMP dispersion of ether-modified cellulose fibers.
The resulting NMP dispersion of ether-modified cellulose fibers was centrifuged, thereby precipitating cellulose fibers, which were then replaced with water. This operation was repeated three times and an adjustment with water was performed, thereby preparing an aqueous dispersion containing 1.0% by mass of ether-modified cellulose fibers having an average fiber diameter of 100 nm.
The ether-modified cellulose fibers were analyzed by $^1$H-NMR, $^{13}$C-NMR and FT-IR, and it was thereby confirmed that a part of the hydroxyl groups from cellulose were substituted by hydrophobic silyl ether groups.

(3) Other strength improvers other than cellulose fibers

- GF: glass fiber, ECS03T-262H made by Nippon Electric Glass Co., Ltd., average fiber diameter: 10 $\mu$m, average fiber length: 3 mm
- CF: carbon fiber, HTA-C6-NR made by Toho Tenax Co., Ltd., average fiber diameter: 7 $\mu$m, average fiber length: 6 mm
- Tc: talc, High micron talc HE5 made by Takehara Chemical Industrial Co., Ltd., average particle diameter: 1.6 $\mu$m

- Mc: mica, S-200HG made by Repco Inc., average particle diameter: 55 $\mu$m

(4) Sliding improver other than cellulose fibers

- PTFE: polytetrafluoroethylene, LUBRON L-5 made by Daikin Industries, Ltd., particle diameter: 5 $\mu$m

(5) Impact resistance improver

- Polyolefin-based polymer (acid-modified polyolefin-based polymer): TAFMER MH-5020 made by Mitsui Chemicals, Inc., maleic anhydride-modified ethylene-butene copolymer
- Polyolefin-based polymer (ionomer polymer): Himilan 1706 made by DuPont-Mitsui Polychemicals Co., Ltd.

(6) Polyamide resins different from the polyamide resin polymerized (i.e., polyamide resins added during the course of kneading)

- PA66: polyamide 66, VYDYNE 50BWFS made by ASCEND
- PA12: polyamide 12, 3024U made by Ube Industries, Ltd.
- PA6/66: polyamide 6/66 copolymer, 5023 made by Ube Industries, Ltd.
- PA6/12: polyamide 6/12 copolymer, 7034 made by Ube Industries, Ltd.
- PA6/66/12: polyamide 6/66/12 copolymer, 6434, made by Ube Industries, Ltd.

Example 1

Using CELISH KY100G as an aqueous dispersion of cellulose fibers, purified water was added thereto and the mixture was stirred with a mixer, and thus an aqueous dispersion having a cellulose fiber content of 3% by mass was prepared.

This aqueous dispersion of cellulose fibers (100 parts by mass) and $\varepsilon$-caprolactam (100 parts by mass) were further stirred and mixed with a mixer until a uniform dispersion was formed. Subsequently, the mixed dispersion was charged into the polymerization apparatus, and then the mixture was heated to 240°C with stirring. The pressure was increased to a pressure of from 0 MPa to 0.5 MPa while gradually discharging water vapor. Thereafter, the pressure was released to the atmospheric pressure, and a polymerization reaction was carried out at 240°C for one hour. At the completion of the polymerization, the resin composition was discharged into a strand shape and cut, thereby affording pellets of the resin composition.

The obtained pellets were refined with hot water at 95°C and then dried, thereby affording pellets of the dried resin composition.

Examples 2 to 4

The same operations as in Example 1 were carried out except that the blending amount of CELISH KY100G was changed such that the content of the cellulose fibers was a value shown in Table 1, thereby affording pellets of a dried resin composition.

Examples 5 to 8, Comparative Example 20

The same operations as in Example 1 were carried out except that the dispersion of cellulose fibers was changed as shown in Table 1, thereby affording pellets of a dried resin composition.

Example 9

The aqueous dispersion having a cellulose fiber content of 3% by mass obtained in Example 1 (100 parts by mass) and a polyamide 66 salt (prepolymer) (100 parts by mass) were stirred and mixed with a mixer until a uniform solution was formed. Subsequently, the mixed solution was heated with stirring at 230°C until the internal pressure reached 1.5 MPa. After reaching the pressure, the pressure was maintained by heating continuously while gradually releasing water vapor. At the arrival at 280°C, the pressure was released to normal pressure, and polymerization was further carried out for one hour. At the completion of the polymerization, the resin composition was discharged into a strand shape and cut, thereby affording pellets of the resin composition.

The obtained pellets were refined with hot water at 95°C and then dried, thereby affording pellets of the dried resin composition.

Examples 10 to 13

To a main hopper of a twin-screw extruder (TEM26SS made by Toshiba Machine Co., screw diameter: 26 mm) was fed 105 parts by mass of the resin obtained in Example 2. On the way, 18 parts by mass of the strength improver shown in Table 1 was fed from a side feeder. The mixture was fully melt-kneaded at 260°C, discharged into a strand shape, and cut, thereby affording pellets of the resin composition.

Example 14

The resin obtained in Example 2 (105 parts by mass) and PTFE (13 parts by mass) were dry-blended and fed to a main hopper of a twin-screw extruder. The mixture was fully melt-kneaded at 260°C, discharged into a strand shape, and cut, thereby affording pellets of the resin composition.

Examples 15, 16

The resin obtained in Example 2 (105 parts by mass) and the impact resistance improver shown in Table 1 were dry-blended in the blending amounts shown in Table 1 and fed to a main hopper of a twin-screw extruder. The mixture was fully melt-kneaded at 260°C, discharged into a strand shape, and cut, thereby affording pellets of the resin composition.

Examples 17, 18

The resin obtained in Example 2 (105 parts by mass) and the impact resistance improver shown in Table 1 were dry-blended in the blending amounts shown in Table 1 and fed to a main hopper of a twin-screw extruder. On the way, 18 parts by mass of the strength improver shown in Table 1 was fed from a side feeder. The mixture was fully melt-kneaded at 260°C, discharged into a strand shape, and cut, thereby affording pellets of the resin composition.

Example 19

The resin obtained in Example 2 (105 parts by mass) and PTFE (13 parts by mass) were dry-blended and fed to a main hopper of a twin-screw extruder. On the way, 18 parts by mass of glass fiber was fed from a side feeder. The mixture was fully melt-kneaded at 260°C, discharged into a strand shape, and cut, thereby affording pellets of the resin composition.

Example 20

The resin obtained in Example 2 (105 parts by mass), PTFE (13 parts by mass), and TAFMER (8 parts by mass) were dry-blended and fed to a main hopper of a twin-screw extruder. The mixture was fully melt-kneaded at 260°C, discharged into a strand shape, and cut, thereby affording pellets of the resin composition.

Examples 21 to 25

The resin obtained in Example 2 (89.25 parts by mass) and 15 parts by mass of the polyamide resin shown in Table 1 were dry-blended and fed to a main hopper of a twin-screw extruder. The mixture was fully melt-kneaded at 260°C, discharged into a strand shape, and cut, thereby affording pellets of the resin composition.

Comparative Example 1

ε-Caprolactam was charged into a polymerization apparatus, and then it was heated to 240°C with stirring. The pressure was increased to a pressure of from 0 MPa to 0.5 MPa while gradually discharging water vapor. Thereafter, the pressure was released to the atmospheric pressure, and a polymerization reaction was carried out at 240°C for one hour. At the completion of the polymerization, the resin was discharged into a strand shape and cut, thereby affording pellets of a polyamide 6 resin (PA6 resin).

The obtained pellets were refined with hot water at 95°C and then dried, thereby affording pellets of the dried PA6 resin.

Comparative Example 2

The polyamide 66 salt was heated at 230°C with stirring until the internal pressure reached 1.5 MPa. After reaching the pressure, the pressure was maintained by heating continuously while gradually releasing water vapor. At the arrival at 280°C, the pressure was released to normal pressure, and polymerization was further carried out for one hour. When the polymerization was completed, the resin was discharged into a strand shape and cut, thereby affording pellets of a polyamide 66 resin.

The obtained pellets were refined with hot water at 95°C and then dried, thereby affording pellets of the dried polyamide 66 resin.

Comparative Examples 3 to 6

The dried PA6 resin obtained in Comparative Example 1 (100 parts by mass) was supplied to a main hopper of a twin-screw extruder, and 18 parts by mass of the strength improver shown in Table 1 was fed on the way from a side feeder. The mixture was fully melt-kneaded at 260°C, discharged into a strand shape, and cut, thereby affording pellets of the resin composition.

Comparative Example 7

The dried PA6 resin obtained in Comparative Example 1 (100 parts by mass) and PTFE (13 parts by mass) were dry-blended and fed to a main hopper of a twin-screw extruder. The mixture was fully melt-kneaded at 260°C, discharged into a strand shape, and cut, thereby affording pellets of the resin composition.

Comparative Examples 8, 9

The dried PA6 resin obtained in Comparative Example 1 (100 parts by mass) and the impact resistance improver shown in Table 1 were dry-blended in the blending amounts shown in Table 1 and fed to a main hopper of a twin-screw extruder. The mixture was fully melt-kneaded at 260°C, discharged into a strand shape, and cut, thereby affording pellets of the resin composition.

Comparative Examples 10, 11

The dried PA6 resin obtained in Comparative Example 1 (100 parts by mass) and the impact resistance improver shown in Table 1 were dry-blended in the blending amounts shown in Table 1 and fed to a main hopper of a twin-screw extruder. On the way, 18 parts by mass of the strength improver shown in Table 1 was fed from a side feeder. The mixture was fully melt-kneaded at 260°C, discharged into a strand shape, and cut, thereby affording pellets of the resin composition.

Comparative Example 12

The dried PA6 resin obtained in Comparative Example 1 (100 parts by mass) and PTFE (13 parts by mass) were dry-blended and fed to a main hopper of a twin-screw extruder. On the way, 18 parts by mass of glass fiber was fed from a side feeder. The mixture was fully melt-kneaded at 260°C, discharged into a strand shape, and cut, thereby affording pellets of the resin composition.

Comparative Example 13

The dried PA6 resin obtained in Comparative Example 1 (100 parts by mass), PTFE (13 parts by mass), and TAFMER (8 parts by mass) were dry-blended and fed to a main hopper of a twin-screw extruder. The mixture was fully melt-kneaded at 260°C, discharged into a strand shape, and cut, thereby affording pellets of the resin composition.

Comparative Examples 14 to 18

The resin obtained in Comparative Example 2 (85 parts by mass) and 15 parts by mass of the polyamide resin shown in Table 1 were dry-blended and supplied to a main hopper of a twin-screw extruder. The mixture was fully melt-kneaded at 260°C, discharged into a strand shape, and cut, thereby affording pellets of the resin composition.

Comparative Example 19

The aqueous dispersion of CELISH KY100G was freeze-dried at -45°C using an FD550 made by TOKYO RIKAKIKAI CO, LTD. as a shelf-type freeze dryer, and was pulverized using a pulverizer.
The resulting cellulose fiber powder (3 parts by mass) and 100 parts by mass of the dried PA6 resin obtained in Comparative Example 1 were dry-blended and supplied to a main hopper of a twin-screw extruder. The mixture was fully melt-kneaded at 260°C, discharged into a strand shape, and cut, thereby affording pellets of the resin composition.

Comparative Examples 21 to 24

Pellets of a resin composition were obtained in the same manner as in Comparative Example 19, except that the aqueous dispersion of the cellulose fiber was changed to the following types.

- Comparative Example 21: CELISH KY100S
- Comparative Example 22: Bacterial cellulose fiber
- Comparative Example 23: Scrap yarn
- Comparative Example 24: TEMPO-catalytically oxidized cellulose fiber

Comparative Example 25

Pellets of a resin composition were obtained in the same manner as in Comparative Example 19, except that the operation of feeding the resulting resin composition pellets to a main hopper of a twin-screw extruder, fully melt-kneading them at 260°C, discharging the mixture into a strand shape, and cutting it was repeated 10 times.
In Tables 1 to 3 are shown the resin compositions of the resin compositions used and the evaluation results of sliding members.
In Examples 1 to 8 and 9, since the resin compositions in which cellulose fibers had been blended with a polyamide resin during polymerization were used, the average fiber diameters of the cellulose fibers in the sliding members were within a prescribed range. For this reason, in each of Examples 1 to 8 and 9, the flexural strength ratio and the flexural modulus ratio were as high as 110% or more and the specific wear amount ratio was as low as 90% or less, as compared with Comparative Examples 1 and 2.
Also in Examples 10 to 25, since the resin compositions in which cellulose fibers had been blended with a polyamide resin during polymerization were used, the average fiber diameters of the cellulose fibers in the sliding members were within a prescribed range. For this reason, in each of Examples 10 to 25, the flexural strength ratio and the flexural modulus ratio were as high as 110% or more and the specific wear amount ratio was as low as 90% or less, as compared with Comparative Examples 3 to 18. At this time, in Examples 10 to 25, since a strength improver, a sliding improver, an impact resistance improver, and/or a polyamide resin different from that used for polymerization were blended together with cellulose fibers, the Charpy impact strength ratio was improved as compared with Example 2.
In Comparative Examples 19, 21 to 24 and 25, since the resin compositions in which cellulose fibers had been blended with a polyamide resin by melt-kneading were used, the average fiber diameters of the cellulose fibers in the sliding members were increased, and the flexural strength ratio was as low as less than 110% and the specific wear amount ratio was as high as more than 90% as compared with Comparative Example 1.
In Comparative Example 20, since the resin composition in which ether-modified cellulose fibers had been blended with a polyamide resin was used, the average fiber diameter of the cellulose fibers in the sliding member was increased, and the flexural strength ratio was as low as 107% and the specific wear amount ratio was as high as 105% as compared with Comparative Example 1.

[Table 1]

| | Resin composition of the resin composition used | | | | | | | Relative viscosity of polymerize d polyamide resin | Evaluation of sliding member | | | | | | |
| | Added during polymerization | | | | Added during kneading | | | | | | | | | | |
| | Polyamide resin | | Cellulose fiber | | Polyamide resin | | Strength improver /Sliding improver / Impact resistance improver | | | Flexural strength | | Flexural modulus | | Specific wear amount | | Comprehensive evaluation of flexural property and sliding property |
| | Type | Content part mass by | Type* | Content part by mass | Type | Content part by mass | Type * | Content part by mass | | MP | %** | GP a | %** | mm³/ (km·kN) | %** | |
| Example 1 | PA6 | 100 | KY100G (56) | 3 | - | - | - | - | 2.5 | 117 | 118△ | 3.1 | 124 ○ | 7.4 | 37○ | △ |
| Example 2 | PA6 | 100 | KY100G (55) | 5 | - | - | - | - | 2.5 | 121 | 122 ○ | 3.5 | 140 ○ | 2.1 | 11⊙ | ○ |
| Example 3 | PA6 | 100 | KY100G (54) | 10 | - | - | - | - | 2.5 | 172 | 174⊙ | 5.1 | 204 ⊙ | 1.5 | 8⊙ | ⊙ |
| Example 4 | PA6 | 100 | KY100G (53) | 20 | - | - | - | - | 2.5 | 222 | 224 ⊙ | 7.9 | 316 ⊙ | 1.3 | 7⊙ | ⊙ |
| Example 5 | PA6 | 100 | KY100S (130) | 3 | - | - | - | - | 2.5 | 111 | 112△ | 3.0 | 120 ○ | 8.2 | 41○ | △ |
| Example 6 | PA6 | 100 | Bacterial cellulose fiber (39) | 3 | - | - | - | - | 2.5 | 134 | 135 ○ | 3.7 | 148 ○ | 1.1 | 6⊙ | ○ |
| Example 7 | PA6 | 100 | Scrap yarn (1300) | 3 | - | - | - | - | 2.5 | 109 | 110△ | 3.0 | 120 ○ | 16.8 | 84△ | △ |
| Example 8 | PA6 | 100 | TEMPO-catalytically oxidized cellulose fiber (10) | 3 | - | - | - | - | 2.5 | 112 | 113△ | 3.2 | 128 ○ | 6.9 | 35○ | △ |

(continued)

| | Resin composition of the resin composition used | | | | | | | | Relative viscosity of polymerized polyamide resin | Evaluation of sliding member | | | | | | |
|---|---|---|---|---|---|---|---|---|---|---|---|---|---|---|---|---|
| | Added during polymerization | | | | Added during kneading | | | | | | | | | | | |
| | Polyamide resin | | Cellulose fiber | | Polyamide resin | | Strength improver /Sliding improver / Impact resistance improver | | | Flexural strength | | Flexural modulus | | Specific wear amount | | Comprehensive evaluation of flexural property and sliding property |
| | Type | Content | Type* | Content | Type | Content | Type * | Content | | | | | | | | |
| | | part mass by | | part by mass | | part by mass | | part by mass | | MP | %** | GP a | %** | mm³/(km·kN) | %** | |
| Example 9 | PA6 6 | 100 | KY100G (85) | 3 | - | - | - | - | 3.2 | 135 | 117△ | 3.6 | 120 ○ | 9.8 | 310 | △ |
| Comparative Example 1 | PA6 | 100 | - | - | - | - | - | - | 2.5 | 99 | 100 × | 2.5 | 100 × | 20.0 | 100× | × |
| Comparative Example 2 | PA6 6 | 100 | - | - | - | - | - | - | 3.2 | 115 | 100 × | 3.0 | 100 × | 32.0 | 100× | × |

"-" means that blending or evaluation was not carried out.

*Values in parentheses indicate the average fiber diameter (nm) of the cellulose fibers in a sliding member.

** The ratio to the evaluation value of a resin composition having the same composition except that a polyamide resin containing no cellulose fiber was used.

[Table 2]

| | Resin composition of the resin composition used | | | | | | | | Relative viscosity of polymerized polyamide resin | Evaluation of sliding member | | | | | | | | |
| | Added during polymerization | | | | Added during kneading | | | | | | | | | | | | | |
| | Polyamide resin | | Cellulose fiber | | Polyamide resin | | Strength improver/ Sliding improver/ Impact resistance improver | | | Flexural strength | | Flexural modulus | | Specific wear amount | | Comprehensive evaluation of flexural property and sliding property | Charpy impact value | |
| | Type | Content part by mass | Type* | Content part by mass | Type | Content part by mass | Type* | Content part by mass | | MPa | %** | GPa | %** | mm³/(km·kN) | %** | | kJ/m2 | %** |
| Example 10 | PA6 | 100 | KY100G (62) | 5 | - | - | GF | 18 | 2.5 | 208 | 122○ | 6.4 | 128○ | 16.7 | 48○ | ○ | 5.1 | 222⊙ |
| Example 11 | PA6 | 100 | KY100G (60) | 5 | - | - | CF | 18 | 2.5 | 260 | 121○ | 8.6 | 141○ | 17.0 | 610 | ○ | 3.3 | 143⊙ |
| Example 12 | PA6 | 100 | KY100G (57) | 5 | - | - | Tc | 18 | 2.5 | 151 | 125○ | 5.3 | 189⊙ | 12.8 | 380 | ○ | 3.4 | 148⊙ |
| Example 13 | PA6 | 100 | KY100G (59) | 5 | - | - | Mc | 18 | 2.5 | 144 | 124○ | 4.7 | 174⊙ | 14.2 | 37○ | ○ | 3.9 | 170⊙ |
| Example 14 | PA6 | 100 | KY100G (59) | 5 | - | - | PTFE | 13 | 2.5 | 111 | 123○ | 3.0 | 120○ | 1.1 | 340 | ○ | 2.9 | 1260 |
| Example 15 | PA6 | 100 | KY100G (62) | 5 | - | - | TAFMER | 8 | 2.5 | 110 | 131○ | 3.2 | 145○ | 19.3 | 410 | ○ | 8.5 | 370⊙⊙ |
| Example 16 | PA6 | 100 | KY100G (62) | 5 | - | - | Ionomer | 12 | 2.5 | 113 | 128○ | 3.2 | 139○ | 22.2 | 410 | ○ | 6.1 | 265⊙⊙ |
| Example 17 | PA6 | 100 | KY100G (61) | 5 | - | - | GF TAFMER | 18 8 | 2.5 | 187 | 121○ | 5.9 | 128○ | 27.8 | 500 | ○ | 7.5 | 326⊙⊙ |
| Example 18 | PA6 | 100 | KY100G (64) | 5 | - | - | CF TAFMER | 18 8 | 2.5 | 223 | 120○ | 7.5 | 121○ | 28.6 | 490 | ○ | 5.5 | 239⊙⊙ |

(continued)

| | Resin composition of the resin composition used | | | | | | | | | Evaluation of sliding member | | | | | | | | |
| | Added during polymerization | | | | Added during kneading | | | | Relative viscosity of polymerized polyamide resin | Flexural strength | | Flexural modulus | | Specific wear amount | | Comprehensive evaluation of flexural property and sliding property | Charpy impact value | |
| | Polyamide resin | | Cellulose fiber | | Polyamide resin | | Strength improver/ Sliding improver/ Impact resistance improver | | | | | | | | | | | |
| | Type | Content part by mass | Type* | Content part by mass | Type | Content part by mass | Type* | Content part by mass | part by mass | MPa | %** | GPa | %** | mm³/(km·kN) | %** | | kJ/m2 | %** |
|---|---|---|---|---|---|---|---|---|---|---|---|---|---|---|---|---|---|---|
| Example 19 | PA6 | 100 | KY100G (64) | 5 | - | - | PTFE GF | 13 18 | 2.5 | 177 | 125○ | 5.7 | 173◉ | 20.3 | 63○ | ○ | 5.4 | 235◉ ◉ |
| Example 20 | PA6 | 100 | KY100G (62) | 5 | - | - | PTFE TAFMER | 13 8 | 2.5 | 91 | 126○ | 2.0 | 167◉ | 23.0 | 62○ | ○ | 5.9 | 257◉ ◉ |
| Example 21 | PA6 | 85 | KY100G (58) | 4.25 | PA66 | 15 | - | - | 2.5 | 130 | 125○ | 3.4 | 126○ | 10.5 | 37○ | ○ | 3.3 | 143◉ |
| Example 22 | PA6 | 85 | KY100G (63) | 4.25 | PA12 | 15 | - | - | 2.5 | 122 | 122○ | 3.1 | 129○ | 10.8 | 37○ | ○ | 4.7 | 204◉ |
| Example 23 | PA6 | 85 | KY100G (61) | 4.25 | PA6/12 | 15 | - | - | 2.5 | 116 | 120○ | 3.3 | 143○ | 10.9 | 38○ | ○ | 4.8 | 209◉ |
| Example 24 | PA6 | 85 | KY100G (63) | 4.25 | PA6/66 | 15 | - | - | 2.5 | 119 | 124○ | 3.2 | 139○ | 11.1 | 37○ | ○ | 4.0 | 174◉ |
| Example 25 | PA6 | 85 | KY100G (62) | 4.25 | PA6/66/12 | 15 | - | - | 2.5 | 114 | 121○ | 3.0 | 143○ | 11.8 | 37○ | ○ | 4.9 | 213◉ |

"-" means that no compound was blended.
*Values in parentheses indicate the average fiber diameter (nm) of the cellulose fibers in a sliding member.
** The ratio to the evaluation value of a resin composition having the same composition except that a polyamide resin containing no cellulose fiber was used.
*** The ratio to the Charpy impact value of Example 2 (2.3 kJ/m²)

[Table 3]

| | Resin composition of the resin composition used | | | | | | | | Relative viscosity of polymerized polyamide resin | Evaluation of sliding member | | | | | | | | |
| | Added during polymerization | | | | Added during kneading | | | | | Flexural strength | | Flexural modulus | | Specific wear amount | | Comprehensive evaluation of flexural property and sliding property | Charpy impact value | |
| | Polyamide resin | | Cellulose fiber | | Polyamide resin | | Strength improver/ Sliding improver/ Impact resistance improver | | | | | | | | | | | |
| | Type | Content part by mass | Type* | Content part by mass | Type | Content part by mass | Type* | Content part by mass | | MPa | %** | GPa | %** | mm³/(km·kN) | %** | | kJ/m² | %* |
| Comparative Example 3 | PA 6 | 100 | - | - | - | - | GF | 18 | 2.5 | 170 | 100 × | 5.0 | 100 × | 35.0 | 100 × | × | 6.5 | - |
| Comparative Example 4 | PA 6 | 100 | - | - | - | - | CF | 18 | 2.5 | 215 | 100 × | 6.1 | 100 × | 28.0 | 100 × | × | 5.5 | - |
| Comparative Example 5 | PA 6 | 100 | - | - | - | - | Tc | 18 | 2.5 | 121 | 100 × | 2.8 | 100 × | 33.3 | 100 × | × | 4.7 | - |
| Comparative Example 6 | PA 6 | 100 | - | - | - | - | Mc | 18 | 2.5 | 116 | 100 × | 2.7 | 100 × | 38.2 | 100 × | × | 4.9 | - |
| Comparative Example 7 | PA 6 | 100 | - | - | - | - | PTFE | 13 | 2.5 | 90 | 100 × | 2.5 | 100 × | 3.2 | 100 × | × | 7.3 | - |
| Comparative Example 8 | PA 6 | 100 | - | - | - | - | TAFMER | 8 | 2.5 | 84 | 100 × | 2.2 | 100 × | 47.2 | 100 × | × | 16.3 | - |
| Comparative Example 9 | PA 6 | 100 | - | - | - | - | Ionomer | 12 | 2.5 | 88 | 100 × | 2.3 | 100 × | 53.9 | 100 × | × | 12.0 | - |
| Comparative Example 10 | PA 6 | 100 | - | - | - | - | GF TAFMER | 18 8 | 2.5 | 155 | 100 × | 4.6 | 100 × | 55.8 | 100 × | × | 11.1 | - |
| Comparative Example 11 | PA 6 | 100 | - | - | - | - | CF TAFMER | 18 8 | 2.5 | 186 | 100 × | 6.2 | 100 × | 58.9 | 100 × | × | 9.3 | - |
| Comparative Example 12 | PA 6 | 100 | - | - | - | - | PTFE GF | 13 18 | 2.5 | 142 | 100 × | 3.3 | 100 × | 32.2 | 100 × | × | 6.8 | - |

| | Resin composition of the resin composition used | | | | | | | Relative viscosity of polymeri zed polyamide resin | Evaluation of sliding member | | | | | | | | |
|---|---|---|---|---|---|---|---|---|---|---|---|---|---|---|---|---|---|
| | Added during polymerization | | | | Added during kneading | | | | Flexural strength | | Flexural modulu s | | Specific wear amount | | Comprehen sive evalua- tion of flexu- ral property and sliding property | Charpy im- pact value | |
| | Polyamide resin | | Cellulose fiber | | Polyamide resin | | Strength improver/ Sliding improver/ Im- pact resistance im- prover | | | | | | | | | | |
| | Ty pe | Content | Type* | Conte nt | Type | Conte nt | Type* | Conte nt | | M Pa | % ** | GP a | %** | mm³/ (km· kN) | % ** | | kJ/ m² | %* |
| | | part by mass | | part by mass | | part by mass | | part by mass | | | | | | | | | | |
| Comparative Example 13 | PA - 6 | 100 | - | - | - | - | PTFE TAFMER | 13 8 | 2.5 | 72 | 100 × | 1.2 | 100 × | 37.3 | 100 × | × | 7.7 | - |
| Comparative Example 14 | .PA 6 | 85 | - | - | PA66 | 15 | - | - | 2.5 | 104 | 100 × | 2.7 | 100 × | 28.3 | 100 × | × | 6.0 | - |
| Comparative Example 15 | PA 6 | 85 | - | - | PA12 | 15 | - | - | 2.5 | 100 | 100 × | 2.4 | 100 × | 29.2 | 100 × | × | 8.0 | - |
| Comparative Example 16 | PA 6 | 85 | - | - | PA6/12 | 15 | - | - | 2.5 | 97 | 100 × | 2.3 | 100 × | 28.8 | 100 × | × | 7.9 | - |
| Comparative Example 17 | PA 6 | 85 | - | - | PA6/66 | 15 | - | - | 2.5 | 96 | 100 × | 2.3 | 100 × | 30.3 | 100 × | × | 7.0 | - |
| Comparative Example 18 | PA 6 | 85 | - | - | PA6/66 /12 | 15 | - | - | 2.5 | 94 | 100 × | 2.1 | 100 × | 32.2 | 100 × | × | 8.3 | - |
| Comparative Example 19 | PA 6 | 100 | - | - | - | - | KY100G (15000) | 3 | 2.5 | 104 | 105 × | 2.7 | 108 × | 19.1 | 96 × | × | 1.5 | 65 |
| Comparative Example 20 | PA 6 | 100 | Ether- modifi ed cellulo se fiber (440) | 3 | - | - | - | - | 2.5 | 106 | 107 × | 2.8 | 112 Δ | 21.0 | 105 × | × | 1.6 | 70 |
| Comparative Example 21 | PA 6 | 100 | - | - | - | - | KY100S (25000) | 3 | 2.5 | 103 | 104 × | 2.5 | 100 × | 19.4 | 97 × | × | 1.4 | 61 × |

(continued)

| | Resin composition of the resin composition used | | | | | | | | Relative viscosity of polymerized polyamide resin | Evaluation of sliding member | | | | | | | | |
| | Added during polymerization | | | | Added during kneading | | | | | Flexural strength | | Flexural modulus | | Specific wear amount | | Comprehensive evaluation of flexural property and sliding property | Charpy impact value | |
| | Polyamide resin | | Cellulose fiber | | Polyamide resin | | Strength improver/ Sliding improver/ Impact resistance improver | | | | | | | | | | | | |
| | Type | Content (part by mass) | Type* | Content (part by mass) | Type | Content (part by mass) | Type* | Content (part by mass) | | MPa | %** | GPa | %** | mm³/(km·kN) | %** | | kJ/m² | %* |
| Comparative Example 22 | PA 6 | 100 | - | - | - | - | Bacterial cellulose fiber (12000) | 3 | 2.5 | 107 | 108 × | 2.7 | 108 × | 18.4 | 92 × | × | 1.5 | 65 × |
| Comparative Example 23 | PA 6 | 100 | - | - | - | - | Scrap yarn (30000) | 3 | 2.5 | 101 | 102 × | 2.5 | 100 × | 19.8 | 99 × | × | 1.6 | 70 × |
| Comparative Examples 24 | PA 6 | 100 | - | - | - | - | TEMPO-catalytically oxidized cellulose fiber (20000) | 3 | 2.5 | 104 | 105 × | 2.6 | 104 × | 18.9 | 95 × | × | 1.6 | 70 × |
| Comparative Example 25 | PA 6 | 100 | - | - | - | - | KY100G (15000) | 3 | 2.5 | 101 | 102 × | 2.6 | 104 × | 19.2 | 96 × | × | 1.4 | 61 |

"-" means that blending or evaluation was not carried out.
* Values in parentheses indicate the average fiber diameter (nm) of the cellulose fibers in a sliding member.
** The ratio to the evaluation value of a resin composition having the same composition except that a polyamide resin containing no cellulose fiber was used.
*** The ratio to the Charpy impact value of Example 2 (2.3 kJ/m²)

INDUSTRIAL APPLICABILITY

The sliding member of the present invention is useful as members in which a metal material has conventionally been used (for example, gears, bearings, and bearings of cams).

**Claims**

1. A sliding member comprising unmodified cellulose fibers or cellulose fibers in which a part of hydroxyl groups from cellulose has been modified with a hydrophilic substituent, which have an average fiber diameter of 10 $\mu$m or less, in an amount of 0.1 to 50 parts by mass with respect to 100 parts by mass of a polyamide resin.

2. The sliding member of claim 1, further comprising a strength improver other than the cellulose fibers in an amount of 0.1 to 50 parts by mass with respect to 100 parts by mass of the polyamide resin.

3. The sliding member of claim 2, wherein the strength improver is one or more kinds of reinforcements selected from the group consisting of a fibrous reinforcement and a particulate reinforcement.

4. The sliding member of any one of claims 1 to 3, further comprising a sliding improver other than the cellulose fiber in an amount of 0.1 to 50 parts by mass with respect to 100 parts by mass of the polyamide resin.

5. The sliding member of claim 4, wherein the sliding improver is one or more kinds of materials selected from the group consisting of a fluororesin, a silicone oil, a phosphate, a mineral oil, a montanate, and molybdenum disulfide.

6. The sliding member of any one of claims 1 to 5, further comprising an impact resistance improver in an amount of 0.1 to 50 parts by mass with respect to 100 parts by mass of the polyamide resin.

7. The sliding member of claim 6, wherein the impact resistance improver is one or more kinds of materials selected from the group consisting of a polyolefin-based polymer, an elastomer, a synthetic rubber, and a natural rubber.

8. The sliding member of any one of claims 1 to 7, wherein the polyamide resin is two or more kinds of polyamide resins.

9. The sliding member of any one of claims 1 to 8, wherein a specific wear amount of the sliding member is 90% or less as compared with a specific wear amount of a sliding member having the same composition except for not comprising the cellulose fiber.

10. The sliding member of any one of claims 1 to 9, wherein
a content of the cellulose fiber is 4 to 30 parts by mass,
an average fiber diameter of the cellulose fiber is 20 to 100 nm, and
the polyamide resin includes polyamide 6.

11. A method for manufacturing a sliding member, wherein cellulose fibers are added during polymerization of a polyamide resin.

12. The method for manufacturing a sliding member of claim 11, wherein the sliding member is the sliding member of any one of claims 1 to 10.

## INTERNATIONAL SEARCH REPORT

International application No.

PCT/JP2018/042050

### A. CLASSIFICATION OF SUBJECT MATTER
Int.Cl. C08L77/00(2006.01)i, C08K7/02(2006.01)i, C08L1/02(2006.01)i,
F16C33/20(2006.01)i

According to International Patent Classification (IPC) or to both national classification and IPC

### B. FIELDS SEARCHED

Minimum documentation searched (classification system followed by classification symbols)
Int.Cl. C08L77/00, C08K7/02, C08L1/02, F16C33/20

| Documentation searched other than minimum documentation to the extent that such documents are included in the fields searched | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2014-136745 A (UNITIKA LTD.) 28 July 2014, claim 1, paragraphs [0019], [0048]-[0052] (Family: none) | 1-12 |
| Y | WO 2016/140240 A1 (UNITIKA LTD.) 09 September 2016, claims 1, 4, paragraphs [0023], [0041]-[0046] & US 2018/0022920 A1 (claims 1, 4, paragraphs [0023], [0042]-[0047]) & CN 107250273 A & KR 10-2017-0125841 A | 1-12 |
| Y | JP 49-63790 A (TOYOBO BOSEKI KABUSHIKI KAISHA) 20 June 1974, claims, page 1, right column, lines 1-8, page 2, upper left column, line 6 to upper right column, line 8 & US 3882077 A (claim 1, column 1, line 9 to column 2, line 14) | 1-12 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 January 2019 (22.01.2019) | 29 January 2019 (29.01.2019) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017171698 A

**Non-patent literature cited in the description**

- *Cellulose,* 1998, vol. 5, 153-164
- *ASTM D3307-01*